# EUROPEAN PATENT SPECIFICATION

(11) **EP 2 636 759 B1**
(45) Date of publication and mention of the grant of the patent: **05.06.2019**
(21) Application number: 10855727.3
(22) Date of filing: 08.11.2010
(51) Int. Cl.: C21D 8/00, B21D 22/02, B23K 26/20, C22C 38/00, C21D 1/673, B21D 53/88, B23K 101/18

(54) **METHOD FOR MANUFACTURING AUTOMOBILE PART HAVING DIFFERENT LOCAL STRENGTHS USING HEAT-TREATMENT HARDENING STEEL PLATE**
VERFAHREN ZUR HERSTELLUNG VON AUTOMOBILTEILEN VON UNTERSCHIEDLICHER LOKALER FESTIGKEIT MITHILFE EINER MITTELS WÄRMEBEHANDLUNG GEHÄRTETEN STAHLPLATTE
PROCÉDÉ DE FABRICATION DE PIÈCE AUTOMOBILE PRÉSENTANT DES RÉSISTANCES LOCALES DIFFÉRENTES, AU MOYEN D'UNE TÔLE D'ACIER DURCIE PAR TRAITEMENT THERMIQUE

(30) Priority: 03.11.2010 KR 20100108528
(43) Date of publication of application: 11.09.2013
(73) Proprietor: Hyundai Steel Company, Metropolitan City (KR)
(72) Inventor: NAM, Seung-Man, Seoul 143-150 (KR); CHAE, Su-Hong, Hwaseong-si Gyeonggi-do 445-704 (KR); KWON, Min-Suck, Suncheon-si Jeollanam-do 540-330 (KR); KIM, Hyo-Sub, Ulsan 683-715 (KR); IM, Hee-Joong, Pyeongtaek-si Gyeonggi-do 451-885 (KR); LEE, Bo-Ryong, Incheon 405-714 (KR); MOON, Man-Been, Guri-si Gyeonggi-do 471-754 (KR)
(74) Representative: Winter, Brandl, Fürniss, Hübner, Röss, Kaiser, Polte - Partnerschaft mbB
(86) International application number: PCT/KR2010/007829
(87) International publication number: WO 2012/060496

(56) References cited:
- WO-A1-2005/009642
- WO-A1-2009/135776
- WO-A2-2006/015849
- FR-A1- 2 827 874
- JP-A- 2004 058 082
- JP-A- 2004 058 082
- JP-A- 2007 154 257
- KR-B1- 100 902 857

## Description

### [Technical Field]

The present invention relates to a method of manufacturing an automobile part having different local strengths and, more particularly, to a method of manufacturing an automobile part using a steel sheet subjected to heat-treatment hardening and having different local thicknesses.

### [Background Art]

Recently, various attempts have been made to achieve improved fuel efficiency and weight reduction of automobiles through increase in strength of automobile parts.

Further, some components of an automobile part may require high strength to satisfy structural characteristics thereof and other components thereof may require high impact resistance. As such, the automobile includes parts having different local strengths (or mechanical properties).

Conventionally, when manufacturing an automobile part having different local strengths, a component requiring higher strength is manufactured using a steel sheet subjected to heat-treatment hardening and a component require lower strength is manufactured using a general steel sheet. Then, these components are welded to each other, thereby providing the automobile part.

When the component subjected to heat-treatment hardening is welded to the component manufactured using a general steel sheet, a welded zone undergoes reheating and cooling, so that heat treatment effects can disappear. In other words, the welded zone suffers from strength deterioration and can break upon collision of the automobile.

In another method, different materials having different thicknesses or strengths are welded to each other to fabricate a blank, which in turn is subjected to cold-forming to fabricate an automobile part.

In this method, however, difference in the degree of elastic deformation between the materials having different thicknesses causes dimensional distortion, thereby making it difficult to achieve desired dimensional accuracy.

In addition, use of materials having different strengths results in a spring back phenomenon in each of the materials, causing dimensional distortion.

JP 2004-58082 A discloses a process for manufacturing a hot press formed article from a tailored blank made of a metallic sheet stock with different materials and/or thicknesses.

WO 2005/009642 A1 teaches a process of cold forming a tailored welded blank consisting of unhardened steel sheet until close to its final size, and then press hardening the cold formed article.

### [Disclosure]

### [Technical Problem]

The present invention is directed to providing an automobile part that is manufactured through a heat-treatment hardening/forming process to prevent residual stress.

In addition, the present invention is directed to providing an automobile part that does not suffer from deterioration in strength at a welded zone.

Further, the present invention is directed to providing an automobile part that does not suffer from a spring back phenomenon and ensures excellent dimensional accuracy.

### [Technical Solution]

In accordance with one aspect of the present invention, there is provided a method of manufacturing an automobile part according to claim 1.

In accordance with another aspect of the present invention, there is provided a method of manufacturing an automobile part according to claim 2.

The steel sheet may include a non-plated cold-rolled steel sheet or a steel sheet subjected to surface treatment by at least one process selected from among Zn plating, Al plating, Al-Si plating and high temperature oxidizing agent coating.

### [Advantageous Effects]

In the method of manufacturing an automobile part having different local strengths according to exemplary embodiments, blanks are prepared using a steel sheet subjected to heat-treatment hardening, joined to each other via laser welding, followed by cold-forming and/or hot-forming to have a desired shape and quenching.

As a result, the produced part does not suffer from residual stress and has high dimensional accuracy.

Further, a laser welded zone of the produced part is also subjected to heat treatment together with the steel sheet matrix, thereby exhibiting the same mechanical properties as those of the steel sheet matrix.

### [Description of Drawing]

Fig. 1 is a flowchart of a method of manufacturing an automobile part having different local strengths using steel sheets subjected to heat-treatment hardening in accordance with a first embodiment of the present invention;
Fig. 2 shows an automobile part in each process of the method of manufacturing an automobile part in accordance with the first embodiment of the present invention;
Fig. 3 is a flowchart of a method of manufacturing an automobile part having different local strengths using steel sheets subjected to heat-treatment hardening in accordance with a second embodiment of the present invention;
Fig. 4 shows an automobile part in each process of the method of manufacturing an automobile part in accordance with the second embodiment of the present invention;
Fig. 5 is a flowchart of a method of manufacturing an automobile part having different local strengths using steel sheets subjected to heat-treatment hardening in accordance with a third embodiment, not being part of the invention; and
Fig. 6 shows an automobile part in each process of the method of manufacturing an automobile part in accordance with the third embodiment, not being part of the invention.

### [Best Mode]

Exemplary embodiments of the present invention will now be described in detail with reference to the accompanying drawings.

It should be noted that the drawings are not to precise scale and may be exaggerated in thickness of lines or size of components for descriptive convenience and clarity.

Furthermore, the terms used herein are defined by taking functions of the present disclosure into account and can be changed according to user or operator's custom or intention.

Therefore, definition of the terms should be made according to the overall disclosure set forth herein.

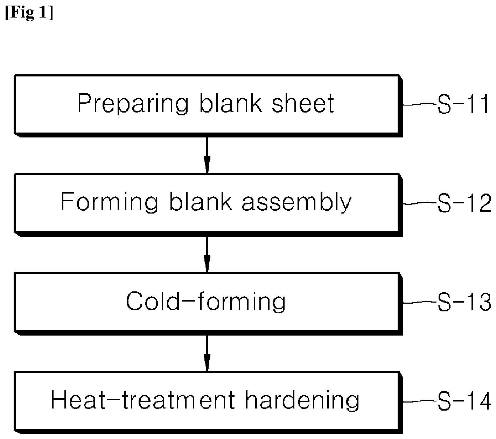

Fig. 1 is a flowchart of a method of manufacturing an automobile part having different local strengths using steel sheets subjected to heat-treatment hardening in accordance with a first embodiment of the present invention.

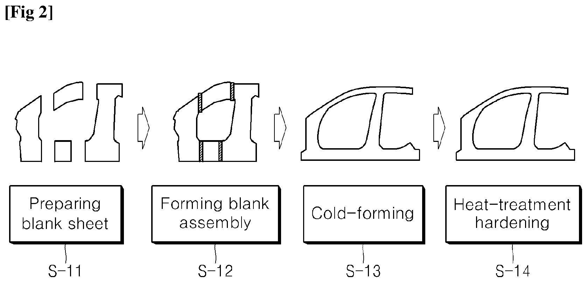

Fig. 2 shows an automobile part in each process of the method of manufacturing an automobile part in accordance with the first embodiment.

Referring to Fig. 1, a method of manufacturing an automobile part according to this embodiment includes:
a blank sheet preparing process S-11 in which blank sheets are prepared from steel sheets subjected to heat-treatment hardening and having different thicknesses according to desired strength;
a blank assembly forming process S-12 in which a blank assembly is formed by joining the blank sheets to each other via laser welding;
a cold-forming process S-13 in which the blank assembly is subjected to cold-pressing; and
a heat-treatment hardening process S-14 in which the cold-pressed part is heated to a temperature of AC₃ or more, followed by quenching the cold-pressed part received within dies to remove residual stress while increasing strength of the produced automobile part.

Fig. 2 shows a process of manufacturing a side reinforcing structure for an automobile by the method according to the first embodiment.

The side reinforcing structure needs to have different local strengths. Furthermore, for reduction in weight of an automobile, it is preferable that a high strength steel sheet used for the automobile be as strong and thin as possible.

However, since a general high strength steel sheet has low formability and causes a spring back phenomenon, it is difficult to form a desired shape while ensuring dimensional accuracy by preventing the spring back phenomenon.

In the method according to this embodiment, blank sheets are prepared from steel sheets subjected to heat-treatment hardening to have different mechanical properties and different thicknesses, and are joined to each other by laser welding.

In the blank sheet preparing process S-11 of the method, the blank sheets corresponding to respective components of an automobile part are prepared from the steel sheets subjected to heat-treatment hardening and having different thicknesses according to desired strength.

In the blank assembly forming process S-12, the prepared blank sheets are joined to each other by laser welding to form a blank assembly.

In the cold-forming process S-13, the blank assembly is subjected to cold-pressing to form a desired shape of the automobile part. Generally, when cold-pressing is performed, dimensional accuracy of the part can be lowered due to the spring back phenomenon.

However, according to this embodiment, in the heat-treatment hardening process S-14 after the cold-forming process S-13, the cold-pressed part is heated to a temperature of AC₃ or more, followed by quenching the cold-pressed part received within dies, which correspond to a final shape of the automobile part. As a result, in the heat-treatment hardening process S-14, residual stress caused by cold-pressing is removed and the strength of the automobile part is increased while ensuring dimensional accuracy.

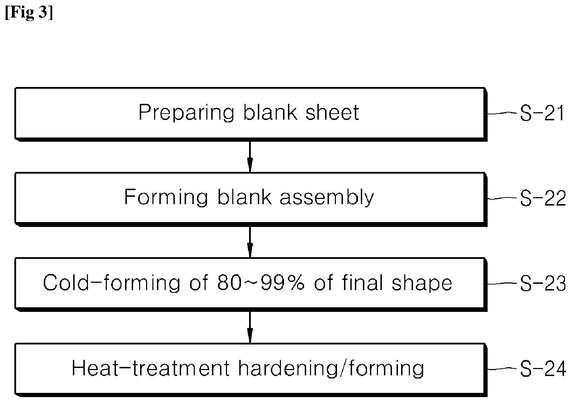

Fig. 3 is a flowchart of a method of manufacturing an automobile part having different local strengths using steel sheets subjected to heat-treatment hardening in accordance with a second embodiment of the present invention.

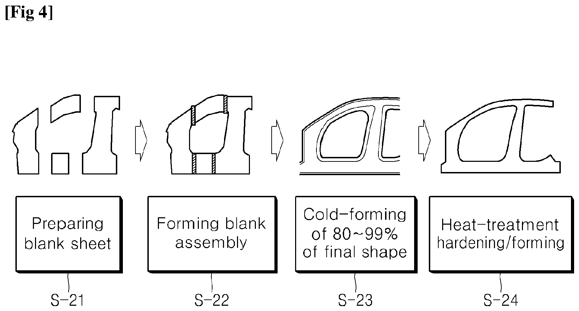

Fig. 4 shows an automobile part in each process of the method of manufacturing an automobile part in accordance with the second embodiment.

When a part has a complex shape or a substantial forming depth, there is a high likelihood of damage of a steel sheet such as tearing during cold-forming.

The method according to the second embodiment may be applied to the case where it is difficult to form a final shape through cold-forming.

As shown in the drawings, the method of manufacturing an automobile part having different local strengths using steel sheets subjected to heat-treatment hardening includes:
a blank sheet preparing process S-21 in which blank sheets are prepared from steel sheets subjected to heat-treatment hardening and having different thicknesses or different mechanical properties according to desired strength;
a blank assembly forming process S-22 in which a blank assembly is formed by joining the blank sheets to each other via laser welding;
a cold-forming process S-23 in which the blank assembly is subjected to cold-pressing to an extent of 80 to 99% of a final shape of the automobile part; and
a heat-treatment hardening/forming process S-24 in which the cold-pressed part is heated to a temperature of AC₃ or more to form the remaining 1 to 20% of the final shape, followed by quenching the formed automobile part received within dies to remove residual stress while increasing strength of the automobile part.

Since the blank sheet preparing process S-21 and the blank assembly forming process S-22 of the method according to this embodiment are the same as those of the first embodiment, repeated descriptions thereof will be omitted.

According to the second embodiment, the blank assembly is subjected to cold-pressing to an extent of 80 to 99% of the final shape in the cold-forming process S-23, and the final part is formed in the heat-treatment hardening/forming process S-24.

Since the part has a three-dimensional shape, it is difficult to define the ratio of forming with a certain numerical value. In this embodiment, the ratio of forming is calculated with reference to the thickness of a final product.

For example, when a final part has a thickness of 50 mm and a cold-formed part has a thickness of 45 mm, the ratio of cold-forming is 90%.

According to this embodiment, the blank assembly is not formed to the level of the final part through cold-forming in consideration of the formed limits upon cold-forming of an automobile part which has a substantial forming depth or a complicated shape, as described above.

In the method of the first embodiment described above, the final process is the heat-treatment hardening process S-14 in which hot-forming is not performed.

On the other hand, in the method of the second embodiment, the final process is the heat-treatment hardening/forming process S-24, in which the remaining 1 to 20% of the final shape is formed by hot-forming the cold-formed part, with the cold-formed part heated to a temperature of AC₃ or more, while quenching the produced part received within dies.

That is, in the heat-treatment hardening/forming process S-24, the cold-pressed part is heated to form the remaining 1 to 20% of the final shape through hot forming, followed by closing the dies and quenching the formed part to harden the part received within the dies, thereby ensuring dimensional accuracy while improving strength.

In both the first and second embodiments, since a laser welded zone of the produced part is also subjected to heat treatment together with the steel sheet, the welded zone has the same microstructure as that of a non-welded zone. As a result, the welded zone is prevented from deterioration in strength.

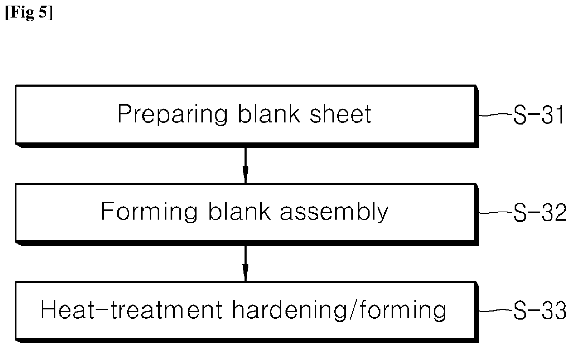

Fig. 5 is a flowchart of a method of manufacturing an automobile part having different local strengths using steel sheets subjected to heat-treatment hardening in accordance with a third embodiment, not being part of the invention.

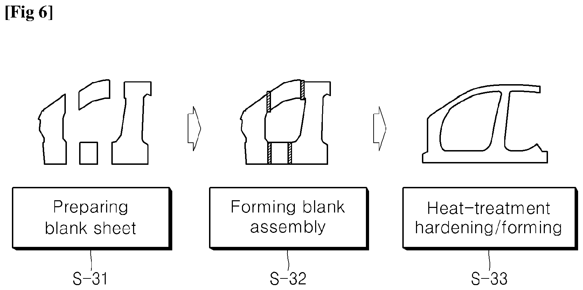

Fig. 6 shows an automobile part in each process of the method of manufacturing an automobile part in accordance with the third embodiment.

Unlike the embodiments described above, the method according to the third embodiment includes forming a desired shape of a part through hot-forming.

The method of manufacturing an automobile part having different local strengths according to the third, non inventive embodiment includes:
a blank sheet preparing process S-31 in which blank sheets are prepared from steel sheets subjected to heat-treatment hardening and having different thicknesses or different mechanical properties according to desired strength;
a blank assembly forming process S-32 in which a blank assembly is formed by joining the blank sheets to each other via laser welding;
a heat-treatment hardening/forming process S-33 in which the blank assembly is heated to a temperature of AC₃ or more, followed by hot-pressing the blank assembly and quenching the hot-pressed part received within dies to remove residual stress while increasing strength of the automobile part.

Since the blank sheet preparing process S-31 and the blank assembly forming process S-32 of the method according to this embodiment are the same as those of the above embodiments, repeated descriptions thereof will be omitted.

According to this embodiment, in the heat-treatment hardening/forming process S-33, the blank assembly is heated to a temperature of AC₃ or more, followed by hot-pressing the blank assembly to form a final shape of an automobile part, and quenching the formed part with the dies receiving the part and closed.

Accordingly, the blank assembly can be subjected to hot-forming and heat-treatment hardening at the same time.

With this method, it is possible to manufacture a high strength automobile part having a strength of 100 kgf/mm² or more without using a high strength steel sheet having low formability.

Next, the steel sheets subjected to heat-treatment hardening according to embodiments of the invention will be described.

The steel sheets subjected to heat-treatment hardening may include cold-rolled steel sheets which are not subjected to surface treatment. Alternatively, the steel sheets may include steel sheets, which are subjected to at least one surface treatment method selected from among Zn plating, Al plating, Al-Si plating and high temperature oxidizing agent coating.

In the method according to the embodiments described above, when the blank assembly is heated to a temperature of AC₃ or more in the heat-treatment hardening process S-14 or in the heat-treatment hardening/forming process S-24 or S-34, carburization or oxidation can occur. To prevent this phenomenon, it is preferable to use the steel sheets subjected to surface treatment as described above.

When using the steel sheet subjected to surface treatment, the steel sheet may be heated to 1000°C or less. When the steel sheet is heated to above 1000°C, a surface plating layer or coating layer can be evaporated from the steel sheet.

Next, the compositions of steel sheets, which are applied to the method according to the present invention, will be described.

According to one exemplary embodiment, the steel sheets used in the blank sheet preparing process may include 0.15 to 0.5 percent by weight (wt%) of carbon (C), 0.15 to 0.5 wt% of silicon (Si), 0.5 to 3.0 wt% of manganese (Mn), 0.1 wt% or less of phosphorous (P), 0.1 wt% or less of sulfur (S), 0.01 to 1.0 wt% of chromium (Cr), 0.2 wt% or less of titanium (Ti), 0.1 wt% or less of aluminum (Al), 0.0005 to 0.08 wt% of boron (B), and the balance of Fe and unavoidable impurities.

The steel sheet subjected to heat-treatment hardening and having this composition may be used to manufacture a high strength automobile part having a strength of 100 kgf/mm² or more.

According to another exemplary embodiment, the steel sheets used in the blank sheet preparing process may include 0.15 to 0.4 wt% of carbon (C), 0.03 to 0.4 wt% of silicon (Si), 1.0 to 2.0 wt% of manganese (Mn), 0.12 wt% or less of phosphorous (P), 0.003 wt% or less of sulfur (S), 0.0005 to 0.08 wt% of boron (B), 0.005 to 0.1 wt% of zirconium (Zr), 0.001 to 0.005 wt% of calcium (Ca), and the balance of Fe and unavoidable impurities.

The steel sheet having this composition has high impact resistance due to addition of zirconium and calcium and thus may be applied to manufacture of blank sheets, which will be used for a part requiring high impact resistance.

According to still another exemplary embodiment, the steel sheets used in the blank sheet preparing process may include 0.15 to 0.30 wt% of carbon (C), 0.05 to 0.5 wt% of silicon (Si), 1.0 to 2.0 wt% of manganese (Mn), 0.0005 to 0.0040 wt% of boron (B), 0.003 wt% or less of sulfur (S), 0.012 wt% or less of phosphorous (P), at least two components selected from among cobalt (Co), zirconium (Zr) and antimony (Sb), and the balance of Fe and unavoidable impurities.

The steel sheet according to this embodiment selectively includes at least two of cobalt (Co), zirconium (Zr) and antimony (Sb), instead of titanium (Ti), niobium (Nb), molybdenum (Mo) and chromium (Cr) which can cause cracking of the steel sheet during hot pressing, in order to secure high temperature ductility. Accordingly, the steel sheet according to this embodiment allows pressing at low temperature, thereby enabling reduction of energy while protecting a plating layer of a plated steel sheet or preventing occurrence of oxidation scales on a non-plated steel sheet.

According to still another exemplary embodiment, in order to improve welding and impact properties, the steel sheets used in the blank sheet preparing process may include 0.15 to 0.40 wt% of carbon (C), 0.03 to 0.30 wt% of silicon (Si), 1.0 to 2.0 wt% of manganese (Mn), 0.0005 to 0.004 wt% of boron (B), optionally, at least one of 0.003 wt% or less of sulfur (S), 0.012 wt% or less of phosphorous (P), 0.001 to 0.005 wt% of calcium (Ca), 0.005 to 0.05 wt% of niobium (Nb), 0.005 to 0.1 wt% of zirconium (Zr) and 0.0005 to 0.5 wt% of cobalt (Co), and the balance of Fe and unavoidable impurities.

According to still another exemplary embodiment, in order to ensure a tensile strength of 1200∼1500 MPa and good ductility, the steel sheets used in the blank sheet preparing process may include 0.19 to 0.40 wt% of carbon (C), 0.5 to 2.5 wt% of manganese (Mn), 0.1 to 0.5 wt% of chromium (Cr), 0.0015 to 0.0040 wt% of boron (B), 0.01 to 0.5 wt% of silicon (Si), 0.05 wt% or less of phosphorous (P), 0.05 wt% or less of sulfur (S), 0.03 wt% or less of aluminum (Al), one or two components selected from among 0.01 to 2 wt% of nickel (Ni), 0.01 to 0.10 wt% of niobium (Nb), 0.01 to 1 wt% of copper (Cu) and 0.01 to 0.20 wt% of molybdenum (Mo), and the balance of Fe and unavoidable impurities.

Although some embodiments have been described herein, it should be understood by those skilled in the art that these embodiments are given by way of illustration only, and that various modifications, variations, and alterations can be made, within the scope of the appended claims.

## Claims

1. A method of manufacturing an automobile part, comprising:
preparing blank sheets using steel sheets subjected to heat-treatment hardening and having different thicknesses or different material properties according to desired strength;
forming a blank assembly by joining the blank sheets to each other via laser welding;
cold-pressing the blank assembly; and
heating the cold-pressed part to a temperature of AC₃ or more, followed by quenching the cold-pressed part received within dies to remove residual stress while increasing strength of the automobile part,
wherein the steel sheets in preparation of the blank sheets comprise at least one composition consisting of a first composition, a second composition, a third composition, a fourth composition and a fifth composition,
wherein the first composition is 0.15 to 0.5 wt% of carbon (C), 0.15 to 0.5 wt% of silicon (Si), 0.5 to 3.0 wt% of manganese (Mn), 0.1 wt% or less of phosphorous (P), 0.1 wt% or less of sulfur (S), 0.01 to 1.0 wt% of chromium (Cr), 0.2 wt% or less of titanium (Ti), 0.1 wt% or less of aluminum (Al), 0.0005 to 0.08 wt% of boron (B), and the balance of Fe and unavoidable impurities,
wherein the second composition is 0.15 to 0.4 wt% of carbon (C), 0.03 to 0.4 wt% of silicon (Si), 1.0 to 2.0 wt% of manganese (Mn), 0.12 wt% or less of phosphorous (P), 0.003 wt% or less of sulfur (S), 0.0005 to 0.08 wt% of boron (B), 0.005 to 0.1 wt% of zirconium (Zr), 0.001 to 0.005 wt% of calcium (Ca), and the balance of Fe and unavoidable impurities,
wherein the third composition is 0.15 to 0.30 wt% of carbon (C), 0.05 to 0.5 wt% of silicon (Si), 1.0 to 2.0 wt% of manganese (Mn), 0.0005 to 0.0040 wt% of boron (B), 0.003 wt% or less of sulfur (S), 0.012 wt% or less of phosphorous (P), at least two components selected from among cobalt (Co), zirconium (Zr) and antimony (Sb), and the balance of Fe and unavoidable impurities,
wherein the fourth composition is 0.15 to 0.40 wt% of carbon (C), 0.03 to 0.30 wt% of silicon (Si), 1.0 to 2.0 wt% of manganese (Mn), 0.0005 to 0.004 wt% of boron (B), optionally, at least one of 0.003 wt% or less of sulfur (S), 0.012 wt% or less of phosphorous (P), 0.001 to 0.005 wt% of calcium (Ca), 0.005 to 0.05 wt% of niobium (Nb), 0.005 to 0.1 wt% of zirconium (Zr) and 0.0005 to 0.5 wt% of cobalt (Co), and the balance of Fe and unavoidable impurities,
wherein the fifth composition is 0.19 to 0.40 wt% of carbon (C), 0.5 to 2.5 wt% of manganese (Mn), 0.1 to 0.5 wt% of chromium (Cr), 0.0015 to 0.0040 wt% of boron (B), 0.01 to 0.5 wt% of silicon (Si), 0.05 wt% or less of phosphorous (P), 0.05 wt% or less of sulfur (S), 0.03 wt% or less of aluminum (Al), one or two components selected from among 0.01 to 2 wt% of nickel (Ni), 0.01 to 0.10 wt% of niobium (Nb), 0.01 to 1 wt% of copper (Cu) and 0.01 to 0.20 wt% of molybdenum (Mo), and the balance of Fe and unavoidable impurities.

2. A method of manufacturing an automobile part, comprising:
preparing blank sheets using steel sheets subjected to heat-treatment hardening and having different thicknesses or different material properties according to desired strength;
forming a blank assembly by joining the blank sheets to each other via laser welding;
cold-pressing the blank assembly to an extent of 80 to 99% of a final shape of the automobile part; and
heating the cold-pressed part to a temperature of AC₃ or more to form the remaining 1 to 20% of the final shape, followed by quenching the formed automobile part received within dies to remove residual stress while increasing strength of the automobile part,
wherein the steel sheets in preparation of the blank sheets comprise at least one composition consisting of a first composition, a second composition, a third composition, a fourth composition and a fifth composition,
wherein the first composition is 0.15 to 0.5 wt% of carbon (C), 0.15 to 0.5 wt% of silicon (Si), 0.5 to 3.0 wt% of manganese (Mn), 0.1 wt% or less of phosphorous (P), 0.1 wt% or less of sulfur (S), 0.01 to 1.0 wt% of chromium (Cr), 0.2 wt% or less of titanium (Ti), 0.1 wt% or less of aluminum (Al), 0.0005 to 0.08 wt% of boron (B), and the balance of Fe and unavoidable impurities,
wherein the second composition is 0.15 to 0.4 wt% of carbon (C), 0.03 to 0.4 wt% of silicon (Si), 1.0 to 2.0 wt% of manganese (Mn), 0.12 wt% or less of phosphorous (P), 0.003 wt% or less of sulfur (S), 0.0005 to 0.08 wt% of boron (B), 0.005 to 0.1 wt% of zirconium (Zr), 0.001 to 0.005 wt% of calcium (Ca), and the balance of Fe and unavoidable impurities,
wherein the third composition is 0.15 to 0.30 wt% of carbon (C), 0.05 to 0.5 wt% of silicon (Si), 1.0 to 2.0 wt% of manganese (Mn), 0.0005 to 0.0040 wt% of boron (B), 0.003 wt% or less of sulfur (S), 0.012 wt% or less of phosphorous (P), at least two components selected from among cobalt (Co), zirconium (Zr) and antimony (Sb), and the balance of Fe and unavoidable impurities,
wherein the fourth composition is 0.15 to 0.40 wt% of carbon (C), 0.03 to 0.30 wt% of silicon (Si), 1.0 to 2.0 wt% of manganese (Mn), 0.0005 to 0.004 wt% of boron (B), optionally, at least one of 0.003 wt% or less of sulfur (S), 0.012 wt% or less of phosphorous (P), 0.001 to 0.005 wt% of calcium (Ca), 0.005 to 0.05 wt% of niobium (Nb), 0.005 to 0.1 wt% of zirconium (Zr) and 0.0005 to 0.5 wt% of cobalt (Co), and the balance of Fe and unavoidable impurities,
wherein the fifth composition is 0.19 to 0.40 wt% of carbon (C), 0.5 to 2.5 wt% of manganese (Mn), 0.1 to 0.5 wt% of chromium (Cr), 0.0015 to 0.0040 wt% of boron (B), 0.01 to 0.5 wt% of silicon (Si), 0.05 wt% or less of phosphorous (P), 0.05 wt% or less of sulfur (S), 0.03 wt% or less of aluminum (Al), one or two components selected from among 0.01 to 2 wt% of nickel (Ni), 0.01 to 0.10 wt% of niobium (Nb), 0.01 to 1 wt% of copper (Cu) and 0.01 to 0.20 wt% of molybdenum (Mo), and the balance of Fe and unavoidable impurities.

3. The method of any one of claims 1 and 2, wherein the steel sheets in preparation of the preparing blank sheets are subjected to surface treatment by at least one process selected from among Zn plating, Al plating, Al-Si plating and high temperature oxidizing agent coating.

## Patentansprüche

1. Verfahren zur Herstellung eines Automobilteils, umfassend:
Herstellen von Rohblechen unter Verwendung von Stahlblechen, die einem Wärmebehandlungshärten unterzogen werden und je nach gewünschter Festigkeit unterschiedliche Dicken oder unterschiedliche Materialeigenschaften aufweisen;
Bilden einer Rohkonstruktion durch Zusammenfügen der Rohbleche mittels Laserschweißen;
Kaltpressen der Rohkonstruktion; und
Erwärmen des kaltgepressten Teils auf eine Temperatur von AC₃ oder mehr, gefolgt von einem Abschrecken des in Formen aufgenommen kaltgepressten Teils, um Restspannung abzubauen während die Festigkeit des Automobilteils erhöht wird,
wobei die Stahlbleche bei der Herstellung der Rohbleche mindestens eine Zusammensetzung umfassen, die aus einer ersten Zusammensetzung, einer zweiten Zusammensetzung, einer dritten Zusammensetzung, einer vierten Zusammensetzung und einer fünften Zusammensetzung besteht,
wobei die erste Zusammensetzung 0,15 bis 0,5 Gew.-% an Kohlenstoff (C), 0,15 bis 0,5 Gew.-% an Silicium (Si), 0,5 bis 3,0 Gew.-% an Mangan (Mn), 0,1 Gew.-% oder weniger an Phosphor (P), 0,1 Gew.-% oder weniger an Schwefel (S), 0,01 bis 1,0 Gew.-% an Chrom (Cr), 0,2 Gew.-% oder weniger an Titan (Ti), 0,1 Gew.-% oder weniger an Aluminium (Al), 0,0005 bis 0,08 Gew.-% an Bor (B) und der Rest Fe und unvermeidbare Verunreinigungen ist,
wobei die zweite Zusammensetzung 0,15 bis 0,4 Gew.-% an Kohlenstoff (C), 0,03 bis 0,4 Gew.-% an Silicium (Si), 1,0 bis 2,0 Gew.-% an Mangan (Mn), 0,12 Gew.-% oder weniger an Phosphor (P), 0,003 Gew.-% oder weniger an Schwefel (S), 0,0005 bis 0,08 Gew.-% an Bor (B), 0,005 bis 0,1 Gew.-% an Zirkonium (Zr), 0,001 bis 0,005 Gew.-% an Calcium (Ca) und der Rest Fe und unvermeidbare Verunreinigungen ist,
wobei die dritte Zusammensetzung 0,15 bis 0,30 Gew.-% an Kohlenstoff (C), 0,05 bis 0,5 Gew.-% an Silicium (Si), 1,0 bis 2,0 Gew.-% an Mangan (Mn), 0,0005 bis 0,0040 Gew.-% an Bor (B), 0,003 Gew.-% oder weniger an Schwefel (S), 0,012 Gew.-% oder weniger an Phosphor (P), mindestens zwei Komponenten, ausgewählt aus Cobalt (Co), Zirkonium (Zr) und Antimon (Sb), und der Rest Fe und unvermeidbare Verunreinigungen ist,
wobei die vierte Zusammensetzung 0,15 bis 0,40 Gew.-% an Kohlenstoff (C), 0,03 bis 0,30 Gew.-% an Silicium (Si), 1,0 bis 2,0 Gew.-% an Mangan (Mn), 0,0005 bis 0,004 Gew.-% an Bor (B), gegebenenfalls mindestens eines von 0,003 Gew.-% oder weniger an Schwefel (S), 0,012 Gew.-% oder weniger an Phosphor (P), 0,001 bis 0,005 Gew.-% an Calcium (Ca), 0,005 bis 0,05 Gew.-% an Niob (Nb), 0,005 bis 0,1 Gew.-% an Zirkonium (Zr) und 0,0005 bis 0,5 Gew.-% an Cobalt (Co), und der Rest Fe und unvermeidbare Verunreinigungen ist,
wobei die fünfte Zusammensetzung 0,19 bis 0,40 Gew.-% an Kohlenstoff (C), 0,5 bis 2,5 Gew.-% an Mangan (Mn), 0,1 bis 0,5 Gew.-% an Chrom (Cr), 0,0015 bis 0,0040 Gew.-% an Bor (B), 0,01 bis 0,5 Gew.-% an Silicium (Si), 0,05 Gew.-% oder weniger an Phosphor (P), 0,05 Gew.-% oder weniger an Schwefel (S), 0,03 Gew.-% oder weniger an Aluminium (Al), eine oder zwei Komponenten, ausgewählt aus 0,01 bis 2 Gew.-% an Nickel (Ni), 0,01 bis 0,10 Gew.-% an Niob (Nb), 0,01 bis 1 Gew.-% an Kupfer (Cu) und 0,01 bis 0,20 Gew.-% an Molybdän (Mo), und der Rest Fe und unvermeidbare Verunreinigungen ist.

2. Verfahren zur Herstellung eines Automobilteils, umfassend:
Herstellen von Rohblechen unter Verwendung von Stahlblechen, die einem Wärmebehandlungshärten unterzogen werden und je nach gewünschter Festigkeit unterschiedliche Dicken oder unterschiedliche Materialeigenschaften aufweisen;
Bilden einer Rohkonstruktion durch Zusammenfügen der Rohbleche mittels Laserschweißen;
Kaltpressen der Rohkonstruktion in einem Ausmaß von 80 bis 99 % einer Endform des Automobilteils; und
Erwärmen des kaltgepressten Teils auf eine Temperatur von AC₃ oder mehr, um die verbleibenden 1 bis 20 % der Endform auszuformen, gefolgt von einem Abschrecken des in Formen aufgenommen geformten Automobilteils, um Restspannung abzubauen während die Festigkeit des Automobilteils erhöht wird.
wobei die Stahlbleche bei der Herstellung der Rohbleche mindestens eine Zusammensetzung umfassen, die aus einer ersten Zusammensetzung, einer zweiten Zusammensetzung, einer dritten Zusammensetzung, einer vierten Zusammensetzung und einer fünften Zusammensetzung besteht,
wobei die erste Zusammensetzung 0,15 bis 0,5 Gew.-% an Kohlenstoff (C), 0,15 bis 0,5 Gew.-% an Silicium (Si), 0,5 bis 3,0 Gew.-% an Mangan (Mn), 0,1 Gew.-% oder weniger an Phosphor (P), 0,1 Gew.-% oder weniger an Schwefel (S), 0,01 bis 1,0 Gew.-% an Chrom (Cr), 0,2 Gew.-% oder weniger an Titan (Ti), 0,1 Gew.-% oder weniger an Aluminium (Al), 0,0005 bis 0,08 Gew.-% an Bor (B) und der Rest Fe und unvermeidbare Verunreinigungen ist,
wobei die zweite Zusammensetzung 0,15 bis 0,4 Gew.-% an Kohlenstoff (C), 0,03 bis 0,4 Gew.-% an Silicium (Si), 1,0 bis 2,0 Gew.-% an Mangan (Mn), 0,12 Gew.-% oder weniger an Phosphor (P), 0,003 Gew.-% oder weniger an Schwefel (S), 0,0005 bis 0,08 Gew.-% an Bor (B), 0,005 bis 0,1 Gew.-% an Zirkonium (Zr), 0,001 bis 0,005 Gew.-% an Calcium (Ca) und der Rest Fe und unvermeidbare Verunreinigungen ist,
wobei die dritte Zusammensetzung 0,15 bis 0,30 Gew.-% an Kohlenstoff (C), 0,05 bis 0,5 Gew.-% an Silicium (Si), 1,0 bis 2,0 Gew.-% an Mangan (Mn), 0,0005 bis 0,0040 Gew.-% an Bor (B), 0,003 Gew.-% oder weniger an Schwefel (S), 0,012 Gew.-% oder weniger an Phosphor (P), mindestens zwei Komponenten, ausgewählt aus Cobalt (Co), Zirkonium (Zr) und Antimon (Sb), und der Rest Fe und unvermeidbare Verunreinigungen ist,
wobei die vierte Zusammensetzung 0,15 bis 0,40 Gew.-% an Kohlenstoff (C), 0,03 bis 0,30 Gew.-% an Silicium (Si), 1,0 bis 2,0 Gew.-% an Mangan (Mn), 0,0005 bis 0,004 Gew.-% an Bor (B), gegebenenfalls mindestens eines von 0,003 Gew.-% oder weniger an Schwefel (S), 0,012 Gew.-% oder weniger an Phosphor (P), 0,001 bis 0,005 Gew.-% an Calcium (Ca), 0,005 bis 0,05 Gew.-% an Niob (Nb), 0,005 bis 0,1 Gew.-% an Zirkonium (Zr) und 0,0005 bis 0,5 Gew.-% an Cobalt (Co), und der Rest Fe und unvermeidbare Verunreinigungen ist,
wobei die fünfte Zusammensetzung 0,19 bis 0,40 Gew.-% an Kohlenstoff (C), 0,5 bis 2,5 Gew.-% an Mangan (Mn), 0,1 bis 0,5 Gew.-% an Chrom (Cr), 0,0015 bis 0,0040 Gew.-% an Bor (B), 0,01 bis 0,5 Gew.-% an Silicium (Si), 0,05 Gew.-% oder weniger an Phosphor (P), 0,05 Gew.-% oder weniger an Schwefel (S), 0,03 Gew.-% oder weniger an Aluminium (Al), eine oder zwei Komponenten, ausgewählt aus 0,01 bis 2 Gew.-% an Nickel (Ni), 0,01 bis 0,10 Gew.-% an Niob (Nb), 0,01 bis 1 Gew.-% an Kupfer (Cu) und 0,01 bis 0,20 Gew.-% an Molybdän (Mo), und der Rest Fe und unvermeidbare Verunreinigungen ist.

3. Verfahren nach einem der Ansprüche 1 und 2, wobei die Stahlbleche bei der Herstellung der Rohbleche einer Oberflächenbehandlung durch mindestens ein Verfahren unterzogen werden, ausgewählt aus Zn-Plattieren, Al-Plattieren, Al-Si-Plattieren und Hochtemperaturoxidationsmittelbeschichten.

## Revendications

1. Procédé de fabrication d'une pièce automobile, comprenant :
la préparation de tôles vierges en utilisant des tôles d'acier soumises à un durcissement par traitement thermique et présentant différentes épaisseurs ou différentes propriétés de matériau selon la résistance souhaitée ;
la formation d'un assemblage vierge en joignant les tôles vierges les unes aux autres via un soudage au laser ;
le pressage à froid de l'assemblage vierge ; et
le chauffage de la pièce pressée à froid à une température de AC₃ ou supérieure, suivie par la trempe de la pièce pressée à froid reçue dans des moules pour éliminer une contrainte résiduelle tout en augmentant la résistance de la pièce automobile,
dans laquelle les tôles d'acier dans la préparation des tôles vierges comprennent au moins une composition consistant en une première composition, une seconde composition, une troisième composition, une quatrième composition et une cinquième composition,
dans lequel la première composition est de 0,15 à 0,5 % en masse de carbone (C), de 0,15 à 0,5 % en masse de silicium (Si), de 0,5 à 3,0 % en masse de manganèse (Mn), de 0,1 % en masse ou moins de phosphore (P), de 0,1 % en masse ou moins de sulfure (S), de 0,01 à 1,0 % en masse de chrome (Cr), de 0,2 % en masse ou moins de titane (Ti), de 0,1 % en masse ou moins d'aluminium (Al), de 0,0005 à 0,08 % en masse de bore (B), et le reste de Fe et d'impuretés inévitables,
dans lequel la seconde composition est de 0,15 à 0,4 % en masse de carbone (C), de 0,03 à 0,4 % en masse de silicium (Si), de 1,0 à 2,0 % en masse de manganèse (Mn), de 0,12 % en masse ou moins de phosphore (P), de 0,003 % en masse ou moins de soufre (S), de 0,0005 à 0,08 % en masse de bore (B), de 0,005 à 0,1 % en masse de zirconium (Zr), de 0,001 à 0,005 % en masse de calcium (Ca), et le reste de Fe et d'impuretés inévitables,
dans lequel la troisième composition est de 0,15 à 0,30 % en masse de carbone (C), de 0,05 à 0,5 % en masse de silicium (Si), de 1,0 à 2,0 % en masse de manganèse (Mn), de 0,0005 à 0,0040 % en masse de bore (B), de 0,003 % en masse ou moins de soufre (S), de 0,012 % en masse ou moins de phosphore (P), d'au moins deux constituants choisis parmi le cobalt (Co), le zirconium (Zr) et l'antimoine (Sb), et le reste de Fe et d'impuretés inévitables,
dans lequel la quatrième composition est de 0,15 à 0,40 % en masse de carbone (C), de 0,03 à 0,30 % en masse de silicium (Si), de 1,0 à 2,0 % en masse de manganèse (Mn), de 0,0005 à 0,004 % en masse de bore (B), éventuellement, d'au moins un de 0,003 % en masse ou moins de soufre (S), de 0,012 % en masse ou moins de phosphore (P), de 0,001 à 0,005 % en masse de calcium (Ca), de 0,005 à 0,05 % en masse de niobium (Nb), de 0,005 à 0,1 % en masse de zirconium (Zr) et de 0,0005 à 0,5 % en masse de cobalt (Co), et le reste de Fe et d'impuretés inévitables,
dans lequel la cinquième composition est de 0,19 à 0,40 % en masse de carbone (C), de 0,5 à 2,5 % en masse de manganèse (Mn), de 0,1 à 0,5 % en masse de chrome (Cr), de 0,0015 à 0,0040 % en masse de bore (B), de 0,01 à 0,5 % en masse de silicium (Si), de 0,05 % en masse ou moins de phosphore (P), de 0,05 % en masse ou moins de soufre (S), de 0,03 % en masse ou moins d'aluminium (Al), d'un ou deux constituants choisis parmi de 0,01 à 2 % en masse de nickel (Ni), de 0,01 à 0,10 % en masse de niobium (Nb), de 0,01 à 1 % en masse de cuivre (Cu) et de 0,01 à 0,20 % en masse de molybdène (Mo), et le reste de Fe et d'impuretés inévitables.

2. Procédé de fabrication d'une pièce automobile, comprenant :
la préparation de tôles vierges en utilisant des tôles d'acier soumises à un durcissement par traitement thermique et présentant différentes épaisseurs ou différentes propriétés de matériau selon la résistance souhaitée ;
la formation d'un assemblage vierge par jonction des tôles vierges l'une à l'autre via un soudage au laser ;
le pressage à froid de l'assemblage vierge dans une mesure de 80 à 99 % d'une forme finale de la pièce automobile ; et
le chauffage de la pièce pressée à froid à une température de AC₃ ou supérieure pour former les 1 à 20 % restants de la forme finale, suivi par une trempe de la pièce automobile formée reçue dans des moules pour éliminer une contrainte résiduelle tout en augmentant la résistance de la pièce automobile,
dans lequel les tôles d'acier dans la préparation des tôles vierges comprennent au moins une composition consistant en une première composition, une seconde composition, une troisième composition, une quatrième composition et une cinquième composition,
dans lequel la première composition est de 0,15 à 0,5 % en masse de carbone (C), de 0,15 à 0,5 % en masse de silicium (Si), de 0,5 à 3,0 % en masse de manganèse (Mn), de 0,1 % en masse ou moins de phosphore (P), de 0,1 % en masse ou moins de sulfure (S), de 0,01 à 1,0 % en masse de chrome (Cr), de 0,2 % en masse ou moins de titane (Ti), de 0,1 % en masse ou moins d'aluminium (Al), de 0,0005 à 0,08 % en masse de bore (B), et le reste de Fe et d'impuretés inévitables,
dans lequel la seconde composition est de 0,15 à 0,4 % en masse de carbone (C), de 0,03 à 0,4 % en masse de silicium (Si), de 1,0 à 2,0 % en masse de manganèse (Mn), de 0,12 % en masse ou moins de phosphore (P), de 0,003 % en masse ou moins de soufre (S), de 0,0005 à 0,08 % en masse de bore (B), de 0,005 à 0,1 % en masse de zirconium (Zr), de 0,001 à 0,005 % en masse de calcium (Ca), et le reste de Fe et d'impuretés inévitables,
dans lequel la troisième composition est de 0,15 à 0,30 % en masse de carbone (C), de 0,05 à 0,5 % en masse de silicium (Si), de 1,0 à 2,0 % en masse de manganèse (Mn), de 0,0005 à 0,0040 % en masse de bore (B), de 0,003 % en masse ou moins de soufre (S), de 0,012 % en masse ou moins de phosphore (P), d'au moins deux constituants choisis parmi le cobalt (Co), le zirconium (Zr) et l'antimoine (Sb), et le reste de Fe et d'impuretés inévitables,
dans lequel la quatrième composition est de 0,15 à 0,40 % en masse de carbone (C), de 0,03 à 0,30 % en masse de silicium (Si), de 1,0 à 2,0 % en masse de manganèse (Mn), de 0,0005 à 0,004 % en masse de bore (B), éventuellement, d'au moins un de 0,003 % en masse ou moins de soufre (S), de 0,012 % en masse ou moins de phosphore (P), de 0,001 à 0,005 % en masse de calcium (Ca), de 0,005 à 0,05 % en masse de niobium (Nb), de 0,005 à 0,1 % en masse de zirconium (Zr) et de 0,0005 à 0,5 % en masse de cobalt (Co), et le reste de Fe et d'impuretés inévitables,
dans lequel la cinquième composition est de 0,19 à 0,40 % en masse de carbone (C), de 0,5 à 2,5 % en masse de manganèse (Mn), de 0,1 à 0,5 % en masse de chrome (Cr), de 0,0015 à 0,0040 % en masse de bore (B), de 0,01 à 0,5 % en masse de silicium (Si), de 0,05 % en masse ou moins de phosphore (P), de 0,05 % en masse ou moins de soufre (S), de 0,03 % en masse ou moins d'aluminium (Al), d'un ou deux constituants choisis parmi de 0,01 à 2 % en masse de nickel (Ni), de 0,01 à 0,10 % en masse de niobium (Nb), de 0,01 à 1 % en masse de cuivre (Cu) et de 0,01 à 0,20 % en masse de molybdène (Mo), et le reste de Fe et d'impuretés inévitables.

3. Procédé selon l'une quelconque des revendications 1 et 2, dans lequel les tôles d'acier dans la préparation des tôles vierges sont soumises à un traitement de surface par au moins un procédé choisi parmi un placage de Zn, un placage d'Al, un placage d'AI-Si et un revêtement d'agent oxydant haute température.
